# EUROPÄISCHE PATENTSCHRIFT

(11) **EP 2 533 962 B1**
(45) Veröffentlichungstag und Bekanntmachung des Hinweises auf die Patenterteilung: **03.05.2017**
(21) Anmeldenummer: 11708694.2
(22) Anmeldetag: 08.02.2011
(51) Int. Cl.: B29C 45/16, F16B 13/04, F16B 13/12, F16B 13/06

(54) **SPREIZDÜBEL**
DOWEL
CHEVILLE À EXPANSION

(30) Priorität: 07.02.2011 DE 102011000537; 11.02.2010 DE 102010000360
(43) Veröffentlichungstag der Anmeldung: 19.12.2012
(60) Teilanmeldung: 14401075.8
(73) Patentinhaber: fischerwerke GmbH & Co. KG, 72178 Waldachtal (DE)
(72) Erfinder: NEHL, Wolfgang, 72178 Waldachtal (DE)
(86) Internationale Anmeldenummer: PCT/EP2011/000557
(87) Internationale Veröffentlichungsnummer: WO 2011/098241

(56) Entgegenhaltungen:
- EP-A1- 1 275 860
- EP-B1- 1 717 459
- AT-B- 237 869
- DE-A1- 3 346 793
- US-A- 5 066 446

## Beschreibung

Die Erfindung betrifft einen Spreizdübel aus Kunststoff mit den Merkmalen des Oberbegriffs des Anspruchs 1.

Aus der europäischen Patentanmeldung EP 1 701 046 A1 ist ein Spreizdübel bekannt, der in ein Bohrloch eingebracht und dort zur Befestigung aufgespreizt werden kann. Der Spreizdübel besteht aus einer rohrförmigen Spreizhülse mit einem Spreizbereich, der durch Einführen einer Holz- oder Spanplattenschraube radial aufspreizbar ist. Der Spreizbereich wird beim Aufspreizen durch die Schraube im Durchmesser aufgeweitet, wodurch Spreizschenkel des Spreizbereichs gegen die Bohrlochwand gedrückt werden. Um eine möglichst große Reibung zwischen den Spreizschenkeln und der Bohrlochwand zu erzielen, sind die Spreizzungen relativ massiv, mit kreissektorförmigen Querschnitten ausgebildet, so dass auch bei Schrauben mit kleinem Durchmesser eine möglichst große radiale Aufweitung des Spreizdübels erreicht werden kann. Nachteilig ist, dass auf Grund der massiven Ausbildung der Spreizzungen die Fähigkeit der Spreizzungen, in Hohlbaustoffen Knoten zu bilden oder auszuknicken, wie dies beispielsweise aus dem Gebrauchsmuster DE 297 04 666 U1 bekannt ist, stark begrenzt ist.

Ein Spreizdübel für weiches Mauerwerk ist aus dem deutschen Gebrauchsmuster DE 7 145 271 bekannt. Dieser Spreizdübel besteht aus einer ersten Spreizhülse aus einem harten Kunststoff, die in eine zweite Spreizhülse aus einem weichen Kunststoff eingesetzt ist. Die erste Spreizhülse, die das in Einbringrichtung vordere Ende des Spreizdübels bildet, ist als hülsenförmiges Ringelement ausgebildet. Die beiden Spreizhülsen weisen einen gemeinsamen axialen Führungskanal auf, in den eine Schraube als Spreizelement eingeschraubt werden kann. Die Schraube ist beispielsweise eine Spanplattenschraube mit einem im Durchmesser gegenüber dem Gewinde erweiterten Schraubenkopf. Der Spreizdübel wird beim Einführen der Schraube zunächst in radialer Richtung aufgeweitet und verspreizt. Ist die Schraube vollständig in den Führungskanal eingeschraubt, so liegt der Schraubenkopf am hinteren Ende des Spreizdübels an. Durch weiteres Drehen der Schraube wird das hülsenförmige Ringelement, und damit die erste Spreizhülse und ein vorderer Abschnitt der zweiten Spreizhülse, zum hinteren Ende des Spreizdübels hin verschoben, wodurch die zweite Spreizhülse verkürzt wird und in einem Spreizbereich wulstartig ausknickt. Auf Grund seines Aufspreizverhaltens ist dieser Spreizdübel insbesondere für weiche Baustoffe und Baustoffe mit Hohlräumen geeignet, beispielsweise für Hochlochziegel. Dagegen ist das Aufspreizverhalten in einem Vollbaustoff, beispielsweise in Beton, wenig vorteilhaft, da ein Ausknicken des Spreizbereichs auf Grund des geringen Ringspalts zwischen der Bohrlochwand und dem Spreizdübel nicht möglich ist. Zudem ist durch die zum Ausknicken notwendige relativ geringe Wandstärke des Spreizbereichs der in radiale Richtung erzeugbare Spreizdruck gering, so dass der Spreizdübel in einem Vollbaustoff nur geringe Haltekräfte erzeugen kann.

Aus dem Dokument EP 1 717 459 B1 ist zudem ein Spreizdübel gemäß dem Oberbegriff des Anspruchs 1 zur Befestigung in plattenartigen Bauteilen bekannt. Dieser gattungsgemäße Spreizdübel weist zwei Spreizhülse auf, die in einem unverspreizten Zustand dreh- und zugfest miteinander verbunden sind. Im Spreizbereich des Spreizdübels ist eine Gleitfläche zwischen den beiden Spreizhülsen vorhanden, so dass sich die Spreizhülsen des Spreizdübels voneinander lösen und gegeneinander bewegen können, wobei sie den Spreizdübel verspreizen.

Aufgabe der Erfindung ist, einen Spreizdübel vorzuschlagen, der in unterschiedlichen Baustoffen verbesserte Halteeigenschaften aufweist.

Diese Aufgabe wird erfindungsgemäß durch einen Spreizdübel mit den Merkmalen des Anspruchs 1 gelöst. Der erfindungsgemäße Spreizdübel aus Kunststoff weist einen Spreizbereich auf, der mit einem Spreizelement aufspreizbar ist. Am Spreizdübel ist ein im Wesentlichen in axialer Richtung verlaufender Führungskanal angeordnet, in den das Spreizelement zum Aufspreizen des Spreizdübels eingeführt werden kann. Mit "Aufspreizen" ist gemeint, dass der Spreizbereich mit dem Spreizelement in radialer Richtung geweitet wird, so dass der Durchmesser eines den Querschnitt des aufgespreizten Spreizdübels umschreibenden Kreises größer ist, als der Durchmesser eines Kreises, der den Querschnitt des nicht-aufgespreizten Spreizdübels umschreibt. Das Spreizelement ist insbesondere stiftförmig und ist insbesondere eine Schraube, beispielsweise eine Holz- oder Spanplattenschraube. Der Spreizdübel umfasst mindestens zwei Spreizhülsen aus Kunststoff, wobei die zweite Spreizhülse die erste Spreizhülse in einem unverspreizten Zustand, also vor dem Einführen des Spreizelements, zumindest teilweise umhüllt. "Aus Kunststoff" bedeutet, dass die Spreizhülsen, wie auch der Spreizdübel, im Wesentlichen aus Kunststoff bestehen, wobei grundsätzlich am oder im Spreizdübel auch Teile aus anderen Materialien, insbesondere Einlegeteile aus Metall, vorgesehen sein können. Erfindungsgemäß sind die erste und die zweite Spreizhülse im unverspreizten Zustand dreh- und zugfest miteinander verbunden. Die Verbindung kann beispielsweise formschlüssig erfolgen. Hierdurch stabilisieren sich die erste und die zweite Spreizhülse insbesondere im Spreizbereich gegenseitig, so dass sie gemeinsam wie eine Spreizhülse aufspreizbar sind. Erfindungsgemäß sind die beiden Spreizhülsen so miteinander verbunden, dass im Spreizbereich zwischen der ersten Spreizhülse und der zweiten Spreizhülse eine Gleitfläche ausgebildet ist. Die beiden Spreizhülsen sind zwei separate Körper, die sich beispielsweise an der Gleitfläche berühren und aneinander haften. In diesem Fall bildet die Fläche, an der sich die beiden Spreizhülsen berühren, die Gleitfläche. Alternativ kann eine eigenständige Schicht zwischen den beiden Spreizhülsen angeordnet sein und als Gleitfläche wirken. Diese Schicht ist beispielsweise aus einem Kunststoff gefertigt, der gegenüber der ersten und der zweiten Spreizhülse eine geringe Reibung aufweist. Die Gleitfläche ist derart ausgebildet, dass sich beim Verspreizen des Spreizdübels die erste Spreizhülse im Spreizbereich von der zweiten Spreizhülse lösen und relativ zur zweiten Spreizhülse bewegen kann. Das Lösen kann im Spreizbereich teilweise oder im Wesentlichen vollständig erfolgen. Haben sich die beiden Spreizhülsen an der Gleitfläche im Wesentlichen vollständig voneinander gelöst, so sind beide Spreizhülsen für sich und unabhängig voneinander aufspreizbar, wobei sie auch weiterhin in Wechselwirkung stehen können.

Wird der erfindungsgemäße Spreizdübel in ein Bohrloch in einem Vollbaustoff eingebracht, so bilden die beiden Spreizhülsen auf Grund der zug- und drehfesten Verbindung gemeinsam einen massiven und stabilen Spreizbereich. Insbesondere bilden die beiden Spreizhülsen im Spreizbereich mindestens zwei massive und stabile primäre Spreizzungen aus, die allein schon durch Einbringen des Spreizelements durch radiales Weiten, wie es von dem Spreizdübel der europäischen Patentanmeldung EP 1 701 046 A1 bekannt ist, in einem Vollbaustoff einen hohen Spreizdruck und somit große Haltekräfte erzeugt. Der Spreizbereich wird beim Einführen des Spreizelements zunächst radial gedehnt und aufgespreizt, ohne dass es zwangsweise zu einer Relativverschiebung oder Verdrehung der beiden Spreizhülsen zueinander kommt. Liegt der Spreizdübel in einem harten Vollbaustoff schon vor dem Einführen des Spreizelements an der Bohrlochwand im Wesentlichen flächig an, so wird beim Verspreizen die erste Spreizhülse nicht notwendigerweise relativ zur zweiten Spreizhülse verschoben und die massiven und stabilen primären Spreizzungen werden im Wesentlichen nur radial nach außen gegen die Bohrlochwand gedrückt. Der Vorteil des erfindungsgemäßen Spreizdübels ist, dass der durch die Spreizhülsen gebildete massive und stabile Spreizbereich durch eine Relativverschiebung der beiden Spreizhülsen zueinander entlang der Gleitflächen aufgelöst werden kann. Beispielsweise kann eine stabile primäre Spreizzunge mit einem relativ großen, massiven Querschnitt in mehrere kleinere sekundäre Spreizzungen zerfallen, die nicht mehr zug- und drehfest miteinander verbunden sind. Die sekundären Spreizzungen weisen einen kleineren Querschnitt mit geringerer Stabilität auf, so dass sie leicht knicken, biegen oder verknoten, wie dies vom Spreizdübel der Offenlegungsschrift DE 100 15 902 A1 bekannt ist. Der Spreizbereich kann nach dem Separieren der beiden Spreizhülsen weit stärker radial aufgespreizt werden, als allein durch das Einführen des Spreizelements. Allgemein gesagt führt die Relativverschiebung der ersten Spreizhülse zur zweiten Spreizhülse dazu, dass die erste Spreizhülse die zweite Spreizhülse nicht mehr stabilisiert, so dass zumindest ein sekundäres Spreizelement der zweiten Spreizhülse ausknicken und/oder tordieren und einen Knoten bilden kann und/oder die erste Spreizhülse in die zweite Spreizhülse eingezogen wird, so dass die erste Spreizhülse die zweite Spreizhülse zusätzlich zum Spreizelement radial dehnt und nach außen drückt. Der erfindungsgemäße Spreizdübel kann daher auch in Hohlbaustoffen oder weichem Mauerwerk eingesetzt werden und erreicht in diesen Baustoffen gute Haltewerte.

Erfindungsgemäß ist die erste Spreizhülse durch das Spreizelement selbst aufspreizbar. Die Aufspreizung der ersten Spreizhülse erfolgt zusätzlich zur Aufspreizung der zweiten Spreizhülse. Wird die zweite Spreizhülse dadurch gespreizt, dass die erste Spreizhülse in die zweite Spreizhülse eingezogen wird, so dass die erste Spreizhülse die zweite Spreizhülse zusätzlich zum Spreizelement radial dehnt und nach außen drückt, so wird die radiale Aufweitung der zweiten Spreizhülse durch die Spreizbarkeit der ersten Spreizhülse vergrößert. Die Aufspreizbarkeit der ersten Spreizhülse ermöglicht zudem, dass Schrauben unterschiedlichster Durchmesser als Spreizelement von der ersten Spreizhülse aufgenommen und formschlüssig mit ihr verbunden werden können, so dass die erste Spreizhülse mit einer Schraube relativ zur zweiten Spreizhülse bewegt werden kann. Eine Verankerung des Spreizdübels in Hohlbaustoffen oder weichem Mauerwerk ist dadurch verbessert.

Die erste Spreizhülse weist in ihrer Umfangsfläche eine Durchbrechung auf, die das Aufspreizen der ersten Spreizhülse in radialer Richtung erleichtert. Die Durchbrechung kann insbesondere ein Längsschlitz sein, der nicht genau axial verlaufen muss, sondern beispielsweise wendelartig angeordnet sein kann oder U-förmig ausgestaltet ist. Der Längsschlitz muss den Spreizkörper nicht unbedingt radial vollständig durchdringen, sondern kann auch als Materialschwächung, insbesondere nutartig oder mit einer Spritzhaut, ausgebildet sein. Auch können mehrere Schlitze vorgesehen sein, die beispielsweise über den Umfang versetzt angeordnet sind.

Eine Ausgestaltung der Erfindung sieht vor, dass die erste Spreizhülse einen Kern beim Urformen der zweiten Spreizhülse bildet. Die zweite Spreizhülse wird beispielsweise aus Kunststoff spritzgegossen. Die erste Spreizhülse kann ebenfalls durch Spritzgießen aus Kunststoff hergestellt sein oder in anderer Weise aus Kunststoff hergestellt werden. Ein Vorteil dieser Art der Herstellung ist, dass die erste Spreizhülse und die zweite Spreizhülse nicht zusammengesetzt werden müssen, sondern nach dem Urformen der zweiten Spreizhülse bereits zusammengesetzt sind. Ein weiterer Vorteil ist, dass die zweite Spreizhülse und/oder die erste Spreizhülse Hinterschneidungen aufweisen können, die ein Zusammensetzen der ersten Spreizhülse und der zweiten Spreizhülse verhindern würden. Mit anderen Worten: eine Formgebung der Außenseite der ersten Spreizhülse und der Innenseite der zweiten Spreizhülse sind durch das Urformen der zweiten Spreizhülse auf der ersten Spreizhülse als Kern freier. So kann beispielsweise die dreh- und zugfeste Ausgestaltung der beiden Spreizhülsen auf einfache Weise erreicht werden, wobei schon allein das durch das Abkühlen nach dem Spritzgießen der zweiten Spreizhülse hervorgerufene Schrumpfen der zweiten Spreizhülse zu einer guten Haftung zwischen den beiden Spreizhülsen führt, so dass besondere Elemente zur Ausbildung der zug- und drehfesten Verbindung nicht notwendigerweise vorhanden sein müssen. Insbesondere kann der erfindungsgemäße Spreizdübel kostengünstig in einem Mehrkomponentenspritzgussverfahren hergestellt werden, wobei zunächst die erste Spreizhülse und danach die zweite Spreizhülse oder umgekehrt hergestellt werden.

Die erste Spreizhülse des erfindungsgemäßen Spreizdübels ist aus einer ersten Kunststoffkomponente gefertigt und die zweite Spreizhülse aus einer zweiten Kunststoffkomponente. Vorzugsweise sind die beiden Kunststoffkomponenten verschieden. Insbesondere wird eine Werkstoffkombination mit niedriger Reibung gewählt, um die erste Spreizhülse mit geringer Kraft relativ zur zweiten Spreizhülse verschieben zu können. Insbesondere ist die Kunststoffkomponente der ersten Spreizhülse relativ hart und die der zweiten Spreizhülse relativ weich, so dass zwischen der Bohrlochwand und der zweiten Spreizhülse eine große Reibung wirkt, die größer ist, als die Reibung in der Gleitfläche zwischen den beiden Spreizhülsen. Alternativ kann die zweite Spreizhülse aus einem harten, beispielsweise faserverstärkten Kunststoff sein, der große Spreizdruckkräfte auf eine Bohrlochwand übertragen kann, während die erste Spreizhülse aus einem weicheren Kunststoff hergestellt ist. Außerdem sollte die gewählte Werkstoffkombination ein Kaltverschweißen, also einen Stoffschluss zwischen den Spreizhülsen, bei hohem Spreizdruck vermeiden. Ein weiterer Aspekt ist eine Werkstoffwahl mit einer Schmelztemperatur der Kunststoffkomponente der zweiten Spreizhülse, die ein Anschmelzen der ersten Spreizhülse im Wesentlichen vermeidet, wenn die Spreizhülse als Urformteil auf der ersten Spreizhülse als Kern hergestellt wird. Zumindest muss gewährleistet sein, dass sich eine definierte Gleitfläche zwischen den beiden Spreizhülsen ausbildet.

Alternativ hierzu können die beiden Kunststoffkomponenten auch aus im Wesentlichen gleichen Material bestehen. So kann für beide Spreizhülsen beispielsweise das Polyamid PA6 verwendet werden. Unabhängig von der Wahl der Kunststoffkomponenten können die beiden Kunststoffkomponenten unterschiedlich gefärbt sein, so dass eine optisch ansprechende Gestaltung des Spreizdübels möglich ist. Auch können bestimmte Farbkombinationen als Hinweis auf den Verwendungszweck bestimmter Spreizdübel verwendet werden. Durch die Verwendung gleicher Kunststoffkomponenten ist es möglich, einen Spreizdübel zu schaffen, der über seine Umfangfläche einen relativ gleichmäßigen Spreizdruck auf eine Bohrlochwand ausübt.

Bei einer weiteren bevorzugten Ausgestaltung der Erfindung verschließt die zweite Spreizhülse die Durchbrechung. Mit "verschließt" ist insbesondere gemeint, dass die Kunststoffkomponente der zweiten Spreizhülse die Durchbrechung im Wesentlichen verfüllt, beispielsweise beim Spritzgießen der zweiten Spreizhülse. Hierdurch werden Hohlräume reduziert, die für die Stabilität des Spreizdübels, insbesondere für die Stabilität im Spreizbereich, nachteilig wären.

Eine Ausgestaltung der Erfindung sieht vor, dass die erste und die zweite Spreizhülse in derselben Richtung quer zum Spreizdübel aufspreizen, also beispielsweise nicht rechwinklig zueinander. Wird die zweite Spreizhülse im Spreizbereich als Schale betrachtet, die die erste Spreizhülse umgreift und in Umfangsrichtung durch beispielsweise zwei Längsschlitze geteilt ist, behindert sie das Aufspreizen der ersten Spreizhülse nicht oder jedenfalls weniger, wenn sie in derselben Richtung wie die erste Spreizhülse spreizt. Wird die zweite Spreizhülse dadurch gespreizt, dass die erste Spreizhülse in die zweite Spreizhülse eingezogen wird, so wird durch das Aufspreizen in derselben Richtung das Maß der radialen Aufspreizung der zweiten Spreizhülse vergrößert.

Eine weitere Ausgestaltung des erfindungsgemäßen Spreizdübels sieht vor, dass die zweite Spreizhülse die erste Spreizhülse im Wesentlichen in axialer Richtung vollständig umhüllt, wodurch die erste Spreizhülse nicht oder nur wenig in unmittelbarem Kontakt mit einer Bohrlochwand steht. Die erste Spreizhülse steht dann im Wesentlichen nur mit der zweiten Spreizhülse in Kontakt, gegenüber der sie bewegbar ist. Diese Ausgestaltung der Erfindung vermeidet vollständig oder zumindest weitgehend Reibung zwischen der ersten Spreizhülse und der Bohrlochwand, die das Verschieben der ersten Spreizhülse behindern würde. Das ist insbesondere dann von Vorteil, wenn nicht nur die zweite Spreizhülse, sondern auch die erste Spreizhülse aufgespreizt wird, da ein Kontakt mit der Lochwand beim Aufspreizen die erste Spreizhülse im Bohrloch verankern und deren Verschiebbarkeit gegenüber der zweiten Spreizhülse beeinträchtigen würde. Eine Verschiebung der ersten Spreizhülse ist jedoch zum Aufspreizen der zweiten Spreizhülse notwendig und soll deswegen nicht oder jedenfalls nur so gering wie möglich durch Kontakt mit einer Lochwand beeinträchtigt werden. Diese Ausgestaltung der Erfindung, bei der die zweite Spreizhülse die erste Spreizhülse über im Wesentlichen ihre gesamte Länge umhüllt, ist bei Ausgestaltungen der Erfindung auch unabhängig von der Aufspreizbarkeit der ersten Spreizhülse durch das Einbringen des Spreizelements möglich.

Eine weitere bevorzugte Ausgestaltung des erfindungsgemäßen Spreizdübels sieht vor, dass die zweite Spreizhülse in ihrer Umfangsfläche eine Öffnung aufweist, die ein Spreizen der zweiten Spreizhülse erleichtert. Diese Öffnung kann beispielsweise als Längsschlitz ausgebildet sein oder V-, U-, S-förmig oder schräg verlaufen. Die Öffnung kann durch eine Erhebung der ersten Spreizhülse durchdrungen und mit der Kunststoffkomponente der ersten Spreizhülse flächig verschlossen sein, so dass kein Hohlraum entsteht, der die Stabilität des Spreizbereichs vermindern würde.

Vorzugsweise erstreckt sich die erste Spreizhülse in axialer Richtung im Wesentlichen über den gesamten Spreizbereich. Die erste Spreizhülse stabilisiert die zweite Spreizhülse in diesem Bereich. Insbesondere kann sich die erste Spreizhülse über die gesamte Länge des Spreizdübels erstrecken.

Vorzugsweise sind an den beiden Spreizhülsen mehrere sekundäre Spreizzungen ausgebildet, die gemeinsam im Spreizbereich angeordnet sind. Dabei können mehrere sekundäre Spreizzungen gemeinsam eine primäre Spreizzunge bilden, wobei im Spreizbereich mindestens zwei primäre Spreizzungen vorgesehen sind. Die sekundären Spreizzungen sind dabei insbesondere säulenartig oder schraubenlinienförmig ausgebildet, derart, dass sie, wenn die beiden Spreizhülsen relativ zueinander und aufeinander zu verschoben werden, leicht ausknicken, sich biegen und/oder tordieren und einen Knoten bilden.

Weiterhin ist bevorzugt, dass die sekundären Spreizzungen der ersten Spreizhülse und die sekundären Spreizzungen der zweiten Spreizhülse in Umfangsrichtung abwechselnd angeordnet sind. Insbesondere berühren sich die sekundären Spreizzungen der beiden Spreizhülsen, so dass sie sich zunächst gegenseitig stabilisieren. Werden die Spreizhülsen durch eine Relativbewegung zueinander zumindest teilweise von einander gelöst, so behindern sich die sekundären Spreizzungen in den Bereichen, in denen sie sich voneinander gelöst haben, beim Aufspreizen nicht gegenseitig.

Die Drehsicherung der ersten Spreizhülse in Bezug auf die zweite Spreizhülse kann beispielsweise durch in Nuten oder Schlitze eingreifende Rippen bewirkt sein. Die Drehsicherung verhindert ein Mitdrehen der ersten Spreizhülse mit einem als Schraube ausgebildeten Spreizelement beim Einschrauben der Schraube. Die zweite Spreizhülse muss gegen Mitdrehen gehalten sein. Ein Drehen der ersten Spreizhülse in der zweiten Spreizhülse bei ihrer Längsverschiebung, beispielsweise durch wendelförmige Rippen und Nuten oder Schlitze, ist nicht ausgeschlossen.

Eine Ausgestaltung sieht vor, dass die erste Spreizhülse mindestens eine nach außen abstehende Längsrippe aufweist, die in eine korrespondierende Ausnehmung, beispielsweise eine Nut oder einen Schlitz der zweiten Spreizhülse, eingreift. Die Längsrippe und die Ausnehmung bilden die bereits beschriebene Drehsicherung der ersten Spreizhülse in Bezug auf die zweite Spreizhülse. Die Ausnehmung schwächt eine Wand der zweiten Spreizhülse, was deren Aufspreizen erleichtert. Ein Schlitz beispielsweise vermeidet eine in Umfangsrichtung geschlossene zweite Spreizhülse, mehrere Schlitze unterteilen die zweite Spreizhülse in Spreizzungen. Beides erleichtert das Aufspreizen der zweiten Spreizhülse. Eine oder mehrere Nuten erleichtern ein Dehnen und/oder ein Aufreißen der zweiten Spreizhülse am Nutgrund, wodurch die zweite Spreizhülse ebenfalls leichter aufspreizbar ist.

Die Erfindung wird nachfolgend anhand von vier in der Zeichnung dargestellten Ausführungsbeispielen näher erläutert. Es zeigen:
- Figuren 1-3:: einen ersten erfindungsgemäßen Spreizdübel in perspektivischen Darstellungen mit unterschiedlichen Blickrichtungen, wobei die zweite Spreizhülse im Halbschnitt gezeichnet ist;
- Figur 4: eine Abwandlung des ersten Spreizdübels in einer perspektivischen Darstellung;
- Figur 5: einen dritten erfindungsgemäßen Spreizdübel in einer perspektivischen Darstellung;
- Figur 6: die erste Spreizhülse des Spreizdübels aus Figur 5 in einer perspektivischen Darstellung;
- Figur 7: eine Schnittdarstellung des Spreizdübels aus Figur 5 (Schnitt VII-VII);
- Figur 8: der Spreizbereich des Spreizdübels aus Figur 5 in einem verspreizten Zustand in einem Hohlbaustoff in einer perspektivischen Darstellung;
- Figur 9: einen vierten erfindungsgemäßen Spreizdübel in einer perspektivischen Darstellung; und
- Figur 10: die erste Spreizhülse des Spreizdübels aus Figur 9 in einer perspektivischen Darstellung.

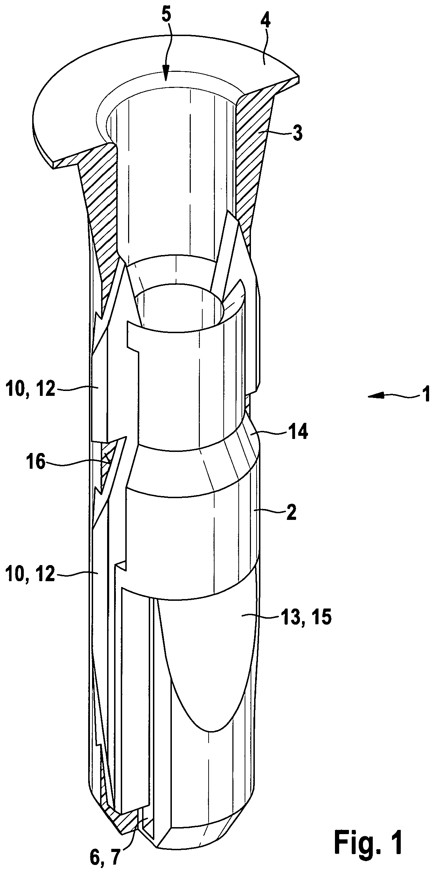

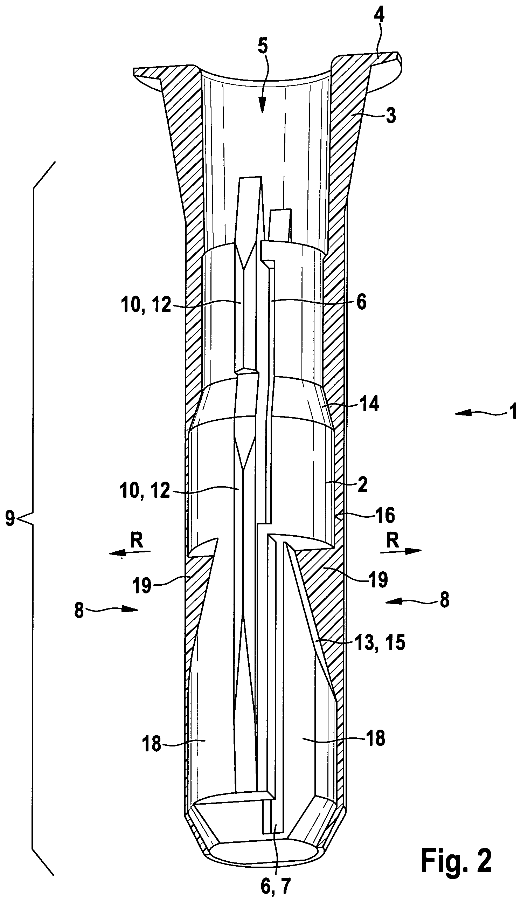

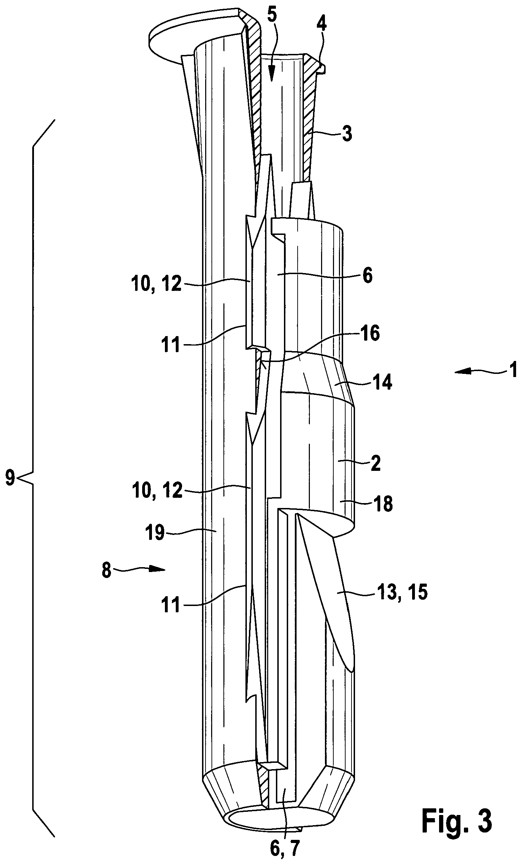

In den Figuren 1 bis 3 ist ein erfindungsgemäßer Spreizdübel 1 in einem unverspreizten Zustand dargestellt. Der Spreizdübel 1 weist eine erste Spreizhülse 2 und eine zweite Spreizhülse 3 auf, welche die erste Spreizhülse 2 im Wesentlichen umhüllt. Die zweite Spreizhülse 3 ist im Wesentlichen rohrförmig und weist einen Radialflansch 4 an einem offenen, hinteren Ende auf. Die zweite Spreizhülse 3 erstreckt sich über die gesamte Länge der ersten Spreizhülse 2. Am hinteren Ende steht die zweite Spreizhülse 3 über die erste Spreizhülse 2 über, wobei sich "hinten" auf die Einsteckrichtung des Spreizdübels 1 in ein Bohrloch bezieht.

Der Spreizdübel 1 weist ein axiales Mittelloch als Führungskanal 5 zum Eindrehen einer nicht dargestellten Schraube auf. Die beiden Spreizhülsen 2, 3 sind nach Art eines Spreizdübels ausgebildet, also durch Einschrauben der Schraube in den Führungskanal 5 aufspreizbar. Um die erste Spreizhülse 2 leicht aufspreizen zu können, weist sie in ihrer Umfangsfläche Längsschlitze 6 als Durchbrechungen 7 auf, die allerdings von der zweiten Spreizhülse 3 im Wesentlichen verschlossen sind. Die Längsschlitze 6 befinden sich in einer Axialebene der ersten Spreizhülse 2. Die erste Spreizhülse 2 spreizt senkrecht zu der Axialebene auf, in der sich die Längsschlitze 6 befinden. Die Richtung, in der die erste Spreizhülse 2 beim Einschrauben einer Schraube aufspreizt, kann auch als Spreizebene aufgefasst werden. Die Spreizebene ist eine Axialebene der ersten Spreizhülse 2, die wie bereits gesagt rechtwinklig zu der Axialebene steht, in der sich die Längsschlitze 6 befinden. Wird eine Schraube in den Führungskanal 5 bis zum vorderen Ende des Spreizdübels 1 eingebracht, so werden die beiden Spreizhülsen 2, 3 zunächst nicht relativ zueinander bewegt, sondern die beiden Spreizhülsen 2, 3 werden ausschließlich senkrecht zur Spreizebene gespreizt und in radialer Richtung R bewegt. Die Spreizebene unterteilt den Spreizdübel 1 in zwei primäre Spreizzungen 8, die aus Teilen der beiden Spreizhülsen 2, 3 bestehen und den Spreizbereich 9 des Spreizdübels 1 bilden.

Unmittelbar neben den Längsschlitzen 6 weist die erste Spreizhülse 2 nach außen abstehende Längsrippen 10 auf, die Öffnungen 11 der zweiten Spreizhülse 3 passgenau durchgreifen und wenig nach außen über die zweite Spreizhülse 3 vorstehen. Zusammen mit den Öffnungen 11 der zweiten Spreizhülse 3, die sie durchgreifen, bilden die Längsrippen 10 der ersten Spreizhülse 2 eine Drehsicherung 12, die die erste Spreizhülse 2 drehfest in der zweiten Spreizhülse 3 hält. Die erste Spreizhülse 2 ist im unverspreizten Zustand zudem in axialer Richtung zugfest mit der zweiten Spreizhülse 3. Wird eine Schraube in den Führungskanal 5 so eingebracht, dass sie den Spreizdübel 1 in axialer Richtung vollständig durchdringt, so kann mit der Schraube eine axiale Kraft auf den vorderen Teil der ersten Spreizhülse 2 aufgebracht werden, so dass die erste Spreizhülse 2 in Richtung des offenen, hinteren Endes der zweiten Spreizhülse 3 verschoben wird. Die von den Längsrippen 10 der ersten Spreizhülse 2 durchgriffenen Öffnungen 11 der zweiten Spreizhülse 3 bilden Ausnehmungen in einer Wand der zweiten Spreizhülse 3, die die zweite Spreizhülse 3 schwächen und ein leichtes Aufspreizen der zweiten Spreizhülse 3 ermöglichen. Die zweite Spreizhülse 3 ist senkrecht zu ihren Öffnungen 11 aufspreizbar. Da sich die Öffnungen 11 der zweiten Spreizhülse 3 unmittelbar neben den Längsschlitzen 6 der ersten Spreizhülse 2 befinden, spreizen die erste Spreizhülse 2 und die zweite Spreizhülse 3 in derselben Richtung auf, also senkrecht zur Spreizebene.

Die erste Spreizhülse 2 und die zweite Spreizhülse 3 sind durch Spritzgießen aus zwei Kunststoffen hergestellt, beispielsweise die zweite Spreizhülse 3 aus Polypropylen und die erste Spreizhülse 2 aus Polyamid. Es sind also die erste Spreizhülse 2 und die zweite Spreizhülse 3 durch Urformen hergestellte Teile. Es wird zuerst die erste Spreizhülse 2 gespritzt, die anschließend als Kern in ein Spritzgießwerkzeug zum Spritzgießen der zweiten Spreizhülse 3 eingebracht wird. Es können auch die erste Spreizhülse 2 und die zweite Spreizhülse 3 in einem Spritzgießwerkzeug in einem Mehrkomponentenspritzgussverfahren hergestellt werden, wobei zuerst die erste Spreizhülse 2 und danach die zweite Spreizhülse 3 spritzgegossen werden. Zum Spritzgießen der ersten Spreizhülse 2 wird in diesem Fall ein nicht dargestelltes Formteil in eine Kavität des Spritzgießwerkzeugs eingelegt, das das Volumen der zweiten Spreizhülse 3 einnimmt. Durch das Spritzgießen der zweiten Spreizhülse 3 um die erste Spreizhülse 2, die einen Kern zum Spritzgießen der zweiten Spreizhülse 3 bildet, wird die zweite Spreizhülse 3 passgenau um die erste Spreizhülse 2 geformt. Somit weist die zweite Spreizhülse 3 Komplementärflächen zu Flächen 15, Körpern 13, 14 und Längsrippen 10 der ersten Spreizhülse 2 auf, die Längsschlitze 6 werden verschlossen. Öffnungen 11 der zweiten Spreizhülse 3 werden von den Längsrippen 10 der ersten Spreizhülse 2 geformt. Die erste Spreizhülse 2 ist aus einem Kunststoff mit höherer Schmelztemperatur als die zweite Spreizhülse 3 hergestellt, damit die als Kern zum Spritzgießen der zweiten Spreizhülse 3 verwendete erste Spreizhülse 2 nicht schmilzt oder anschmilzt, wenn die zweite Spreizhülse 3 um sie gespritzt wird. Die beiden Spreizhülsen 2, 3 sind somit nicht einstückig. Zwischen den beiden Spreizhülsen 2, 3 entsteht eine Gleitfläche 16, so dass sich beim Verspreizen des Spreizdübels 1 die erste Spreizhülse 2 in einem Spreizbereich 9 von der zweiten Spreizhülse 3 lösen kann und relativ zur zweiten Spreizhülse 3 bewegbar ist.

Die erste Spreizhülse 2 weist zwei Spreizkörper 13, 14 auf. Der weiter vorn befindliche erste Spreizkörper 13 ist keilförmig, er weist zwei einander gegenüberliegende Keil- oder Schrägflächen 15 auf, die nach vorn schräg auseinander verlaufen. Der weiter hinten befindliche, zweite Spreizkörper 14 ist konisch, er erweitert sich ebenfalls nach vorn. Für eine axial kurze Befestigung, beispielsweise für eine Befestigung in einer durchbohrten Platte, würde nur der zweite, hintere Spreizkörper 14 genügen und der Spreizdübel 1 könnte entsprechend kürzer ausgebildet sein (nicht dargestellt). Der hintere Spreizkörper 14 könnte wie der vordere Spreizkörper 13 keilförmig anstatt konisch sein, ebenso könnte der vordere Spreizkörper 13 konisch anstatt keilförmig sein. Auch andere Formen, beispielsweise pyramidenförmige Spreizkörper sind möglich (nicht dargestellt). Es ist auch möglich, den Spreizdübel 1 mit mehr als zwei Spreizkörpern auszubilden (nicht dargestellt). Durch die zwei Spreizkörper 13, 14 kann ein Halt des Spreizdübels 1 in einem Bohrloch in einem Vollbaustoff erhöht werden. In einem Hohlbaustoff bewirken die Spreizkörper 13, 14 bei einer Verschiebung der ersten Spreizhülse 2 zum hinteren Ende des Spreizdübels 1 eine größere radiale Aufspreizung der zweite Spreizhülse 3, wodurch beispielsweise Stege in Hochlochziegeln oder Platten mit dem Spreizdübel 1 besser hintergriffen werden können. Die Spreizkörper 13, 14 sind so ausgebildet, dass eine Verschiebung der ersten Spreizhülse 2 in der zweiten Spreizhülse 3 nach hinten die zweite Spreizhülse 3 zusätzlich zur Schraube aufspreizt. Dabei löst sich die erste Spreizhülse 2 entlang der Gleitfläche 16 von der zweiten Spreizhülse 3. Die beiden primären Spreizzungen 8 zerfallen in einzelne sekundäre Spreizzungen 18, 19 der beiden Spreizhülsen 2, 3. Die sekundären Spreizzungen 19 der zweiten Spreizhülse 3 sind nun weniger stabil als die primären Spreizzungen 8, so dass sie leichter gebogen und radial aufspreizbar sind.

Zum Aufspreizen des Spreizdübels 1 wird, wie bereits erwähnt, eine nicht dargestellte Schraube in den axialen Führungskanal 5 eingeschraubt. Die Schraube spreizt die erste Spreizhülse 2 und die sie umschließende zweite Spreizhülse 3 nach Art eines Spreizdübels auf. Die auf einer Seite der Spreizebene E_{S} liegenden Teile des Spreizbereichs 9 der Spreizhülsen 2, 3 wirken gemeinsam als primäre Spreizzungen 8. Da die erste Spreizhülse 2 und die zweite Spreizhülse 3 in derselben Richtung aufspreizen, behindert die die erste Spreizhülse 2 umschließende zweite Spreizhülse 3 das Aufspreizen nicht. Durch das beschriebene Aufspreizen klemmt die zweite Spreizhülse 3 in einem Bohrloch fest. In diesem Zustand sind die beiden Spreizhülsen 2, 3 weiterhin dreh- und zugfest miteinander verbunden.

Wird die nicht dargestellte Schraube weiter in die erste Spreizhülse 2 eingeschraubt, so bewirkt die Schraube eine Zugkraft auf die Spreizhülse 2. Die Schraube zieht nach dem Überwinden einer bestimmten axialen Kraft die erste Spreizhülse 2 in der zweiten Spreizhülse 3 nach hinten in Richtung des Radialflanschs 4. Dabei spreizen die sich nach vorn aufweitenden Spreizkörper 13, 14 der ersten Spreizhülse 2 die sekundären Spreizzungen 19 der zweiten Spreizhülse 3 zusätzlich auf. Die Verankerung des Spreizdübels 1 in einem Bohrloch wird dadurch verbessert.

Außerdem weist der Spreizdübel 1 ein Nachspreizverhalten auf: Erweitert sich ein Bohrloch, in dem der Spreizdübel 1 aufgespreizt und verankert ist, beispielsweise in Folge von Rissbildung, bewirkt eine Zugkraft, die eine durch einen befestigten Gegenstand belastete Schraube, die in der ersten Spreizhülse 2 eingeschraubt ist, auf die erste Spreizhülse 2 ausübt, eine weitere Verschiebung der ersten Spreizhülse 2 in Richtung des hinteren Endes der zweiten Spreizhülse 3, die die zweite Spreizhülse 3 weiter aufspreizt, d.h. nachspreizt, so dass der Spreizdübel 1 mit im Wesentlichen unveränderter Verankerungskraft im Bohrloch verankert bleibt, wenn sich dieses beispielsweise in Folge einer Rissbildung aufweitet.

Die zweite Spreizhülse 3 umschließt die erste Spreizhülse 2 auf ihrer gesamten Länge, lediglich die Längsrippen 10 der ersten Spreizhülse 2 kommen mit einer nicht dargestellten Wand eines ebenfalls nicht dargestellten Bohrlochs in Kontakt. Dadurch wirkt beim Aufspreizen fast keine Reibung zwischen dem Bohrloch und der ersten Spreizhülse 2, die erste Spreizhülse 2 ist verhältnismäßig leichtgängig in der zweiten Spreizhülse 3 verschiebbar. Da die zweite Spreizhülse 3 bereits beim Einschrauben der Schraube in die erste Spreizhülse 2 durch deren Aufspreizen aufgespreizt wird, bekommt sie ausreichend Halt in einem Bohrloch, um anschließend die erste Spreizhülse 2 in der zweiten Spreizhülse 3 zu verschieben und die zweite Spreizhülse 3 weiter aufzuspreizen.

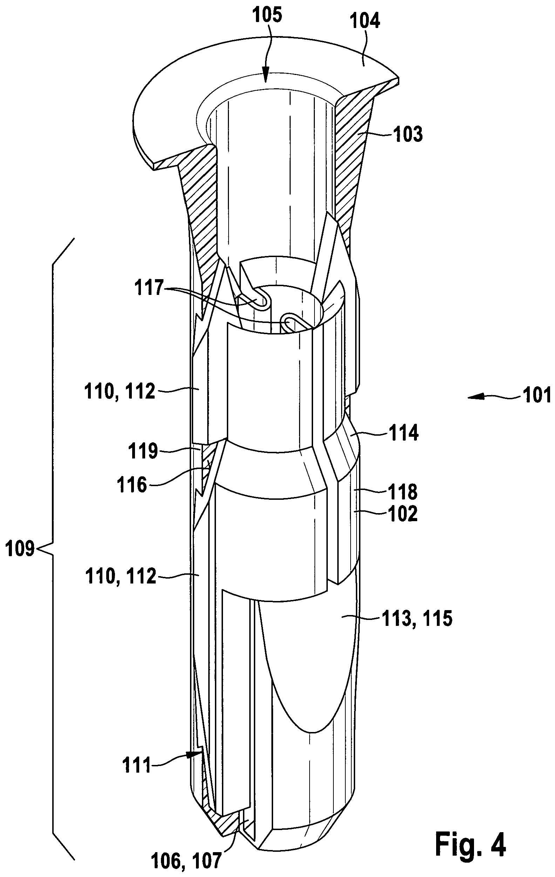

Im Vergleich mit dem in den Figuren 1-3 dargestellten Spreizdübel 1 weist die erste Spreizhülse 102 des Spreizdübels 101 aus der Figur 4 U-förmige Längsfalten 117 auf, die sich in Längsrichtung über einen hinteren bis mittleren Bereich der ersten Spreizhülse 102 erstrecken. Die Längsfalten 117 sind einander gegenüber angeordnet und stehen nach innen. Sie erstrecken sich von einem hinteren Ende der ersten Spreizhülse 102 über den zweiten Spreizkörper 114 hinweg bis zu einem hinteren Ende des vorderen Spreizkörpers 113. Die Längsfalten 117 erleichtern das Aufspreizen der ersten Spreizhülse 102 beim Einschrauben einer nicht dargestellten Schraube, sie ergänzen die Längsschlitze 106 in diesem Bereich. Die Längsschlitze 106 im vorderen Bereich der ersten Spreizhülse 102, die sich über den ersten Spreizkörper 113 erstrecken, bleiben unverändert.

Mit Ausnahme der erläuterten Längsfalten 117 ist der in Figur 4 dargestellte, erfindungsgemäße Spreizdübel 101 gleich ausgebildet und funktioniert in gleicher Weise wie der in Figuren 1-3 dargestellte Spreizdübel 1. Zur Vermeidung von Wiederholungen werden zur Erläuterung der Figur 4 ergänzend die Erläuterungen der Figuren 1-3 in Bezug genommen.

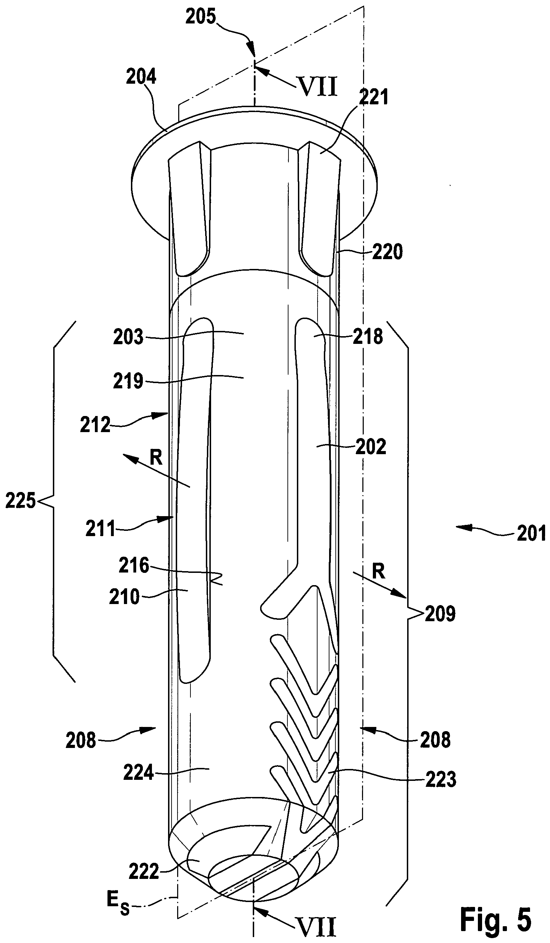

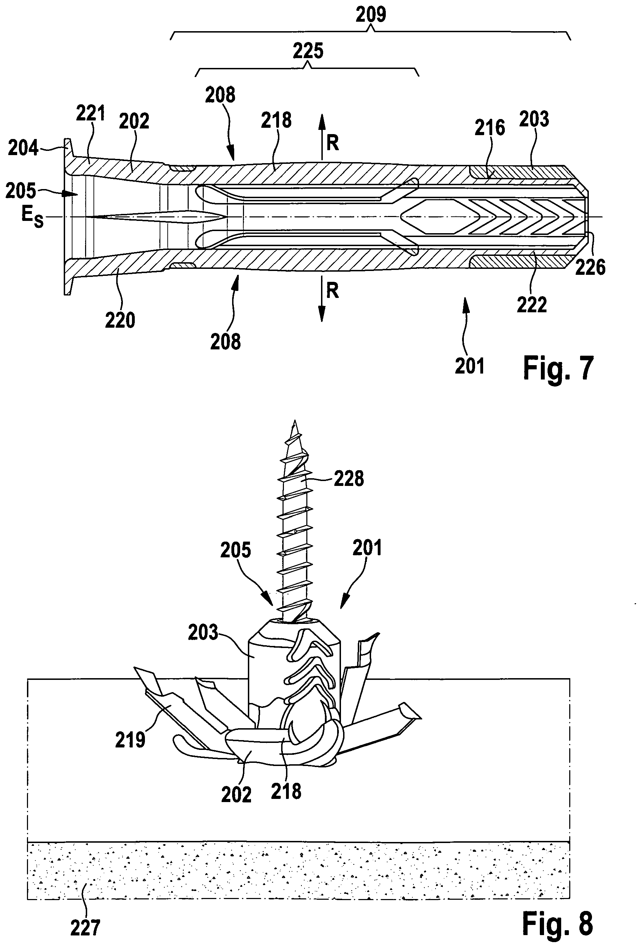

In den Figuren 5 bis 8 ist ein weiterer erfindungsgemäßer Spreizdübel 201 dargestellt. Der Spreizdübel 201 weist eine erste Spreizhülse 202 und eine zweite Spreizhülse 203 auf. Die erste Spreizhülse 202 ist aus einer weicheren Kunststoffkomponente, die zweite Spreizhülse 203 aus einer härteren, glasfaserverstärktem Kunststoffkomponente hergestellt. In einem unverspreizten Zustand, wie er in den Figuren 5 und 7 dargestellt ist, umschließt die zweite Spreizhülse 203 die erste Spreizhülse 202 im Spreizbereich 209, wobei die zweite Spreizhülse 203 Öffnungen 211 aufweist, die von der Kunststoffkomponente der ersten Spreizhülse 202 durchdrungen sind.

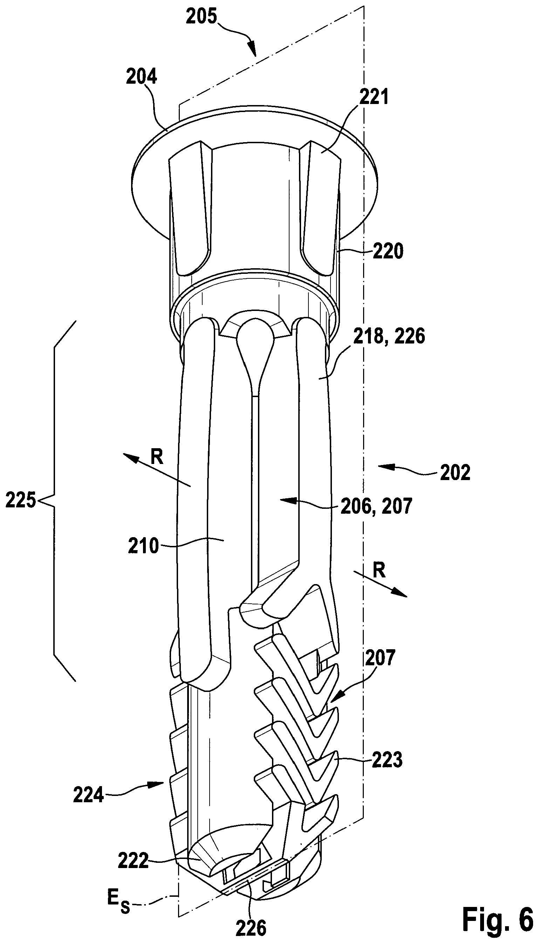

Die erste Spreizhülse 202 ist als ein Spritzgussteil hergestellt. In der Figur 6 ist die erste Spreizhülse 202 allein, ohne die zweite Spreizhülse 203 dargestellt. Die erste Spreizhülse 202 unterteilt sich in drei Bereiche: am hinteren Ende der ersten Spreizhülse 202 ist eine rohrförmige hintere Hülse 220 mit einem umlaufenden Radialflansch 204 angeordnet. Zur Stabilisierung des Radialflansches 204 sind vier keilförmige Rippen 221 an der rohrförmigen Hülse 220 vorhanden, die in Umfangsrichtung verteilt sind und in axialer Richtung verlaufen. Die keilförmigen Rippen 221 übernehmen am Spreizdübel 201 zudem die Funktion von Drehsicherungsrippen zur Sicherung des Spreizdübels 201 gegen Mitdrehen in einem Bohrloch, wenn eine Schraube in den Spreizdübel 201 eingedreht wird. An ihrem vorderen Ende sind an der Spreizhülse 202 zwei kreissegmentförmige Spreizschalen 222 angeordnet, die durch V-förmige Verbindungsstege 223 miteinander verbunden sind. Die beiden Spreizschalen 222 und die V-förmigen Verbindungsstege 223 bilden eine rohrförmige vordere Hülse 224 zur Aufnahme einer Schraube. Die hintere Hülse 220 und die vordere Hülse 224 sind durch vier in Längsrichtung gestreckte, säulenartige Längsrippen 210 verbunden, die einen Stauchbereich 225 bilden. Die hintere Hülse 220 ist an ihrem vorderen Ende im Durchmesser reduziert. Die vordere Hülse 224 weist in Richtung der beiden Spreizschalen 222 eine geringere radiale Ausdehnung auf, als in Richtung der V-förmigen Verbindungsstege 223. Über die Länge der ersten Spreizhülse 202 verläuft axial mittig ein axialer Führungskanal 205, der zur Aufnahme einer Schraube als Spreizelement vorgesehen ist. Der Führungskanal 205 wird an seinem vorderen Ende von einer radial verlaufenden Rippe 226 der ersten Spreizhülse 202 durchquert.

Die in Figur 6 dargestellte erste Spreizhülse 202 bildet beim Urformen der zweiten Spreizhülse 203 einen Kern. Der Spreizdübel 201 wird in einem Mehrkomponentenspritzgussverfahren hergestellt: Zunächst wird die erste Spreizhülse 202 im Werkzeug gespritzt, beispielsweise aus einem Polyamid PA6. In einem zweiten Schritt dient die erste Spreizhülse 202 als Kern, um den die zweite Spreizhülse 203 gespritzt wird, beispielsweise aus einem faserverstärkten Polyamid, so dass in diesem Fall die zweite Spreizhülse 203 härter und spröder als die erste Spreizhülse 202 ist. Während des Spritzvorgangs der zweiten Spreizhülse 203 verbleibt ein Werkzeugkern im Führungskanal 205 der erste Spreizhülse 202, so dass dieser, im Gegensatz zu anderen Hohlstellen und Öffnungen der ersten Spreizhülse 202, nicht mit der Kunststoffkomponente der zweiten Spreizhülse 203 gefüllt wird. Die Kunststoffkomponente der zweiten Spreizhülse 203 füllt insbesondere die Durchbrechungen der Umfangsfläche der ersten Spreizhülse zwischen der radial verlaufenden Rippe 226, den V-förmigen Stegen 223, den Spreizschalen 222 und den Längsrippen 210 der ersten Spreizhülse 202. Auf Grund der Ausgestaltung der Durchbrechungen im Bereich der vorderen Hülse 224 sind die beiden Spreizhülsen im Bereich der vorderen Hülse 224 formschlüssig und fest miteinander verbunden. Die Längsrippen 210 stehen nach außen ab. Durch das Umspritzen mit der Kunststoffkomponente der zweiten Spreizhülse 203 greifen die Längsrippen 210 in korrespondierende Ausnehmungen der zweiten Spreizhülse 203 ein, so dass die Längsrippen 210 mit den Ausnehmungen eine Drehsicherung 212 bilden und zudem die beiden Spreizhülsen 202, 203 im unverspreizten Zustand zugfest miteinander verbinden. Zwischen der ersten Spreizhülse 202 und der zweiten Spreizhülse 203 bildet sich eine Gleitfläche 216 aus, auf der sich beim Verspreizen des Spreizdübels 201 die erste Spreizhülse 202 im Spreizbereich 209 von der zweiten Spreizhülse 203 lösen kann und relativ zur zweiten Spreizhülse 203 bewegbar ist. Die Längsrippen 210 bilden sekundäre Spreizzungen 218 der ersten Spreizhülse 202. Das zwischen diesen sekundären Spreizzungen 218 liegende Material der Kunststoffkomponente der zweiten Spreizhülse 203 bildet sekundäre Spreizzungen 219 der zweiten Spreizhülse 203. Die sekundären Spreizzungen 218, 219 sind somit in Umfangsrichtung abwechselnd angeordnet.

Wird eine Schraube in den Führungskanal 205 des erfindungsgemäßen Spreizdübels 201 eingeführt, so wird der Spreizdübel zunächst in einer radiale Spreizrichtung R aufgeweitet, und zwar ausschließlich durch die Schraube, die Material der Spreizhülsen 202, 203 in radialer Richtung nach außen, in Richtung der Bohrlochwand verdrängt. Die Bewegung der beiden Spreizhülsen 202, 203 verläuft im Wesentlichen in radialer Richtung R. Durch die Dehnbarkeit der V-förmigen Stege 223 ist die radiale Spreizrichtung R vorgegeben. Die Öffnungen 211 und die Durchbrechungen 207 erleichtern das radiale Weiten der beiden Spreizhülsen 202, 203. Die radiale Spreizrichtung R verläuft senkrecht zu einer Spreizebene E_{S}, die durch die Spitzen der V-förmigen Verbindungsstege 223 verläuft. Da durch das Einbringen der Schraube zunächst keine relative Bewegung der beiden Spreizhülsen 202, 203 zueinander erfolgt, wirken die Teile der beiden Spreizhülsen 202, 203, die jeweils auf einer Seite der Spreizebene E_{S} liegen, gemeinsam jeweils als eine primäre Spreizzunge 208 (vgl. Figur 7). Auf Grund des Herstellungsverfahrens, bei dem Hohlräume der ersten Spreizhülse 202 durch die Kunststoffkomponente der zweiten Spreizhülse 203 ausgefüllt werden, sind diese primären Spreizzungen 208 massiv und in sich stabil. Befindet sich der Spreizdübel 201 in einem Bohrloch in einem Vollbaustoff, beispielsweise im Beton, und liegt der Spreizdübel 201 schon vor dem Aufspreizen im Wesentlichen vollflächig an der Bohrlochwand an, so wird insbesondere das relativ harte Kunststoffmaterial der zweiten Spreizhülse 203 allein schon durch das Einbringen der Schraube in den axialen Führungskanal 205 so sehr gegen die Bohrlochwand gepresst, dass mit dem erfindungsgemäßen Spreizdübel 201 sehr hohe Haltewerte im Bohrloch erreicht werden.

Wird der erfindungsgemäße Spreizdübel 201 dagegen in einem Hohlbaustoff eingesetzt, beispielsweise in einem Hochlochziegel oder in einer Gipskartonplatte, so kommt es zu einer Relativverschiebung zwischen den beiden Spreizhülsen 202, 203. Figur 8 zeigt einen vorderen Teil des erfindungsgemäßen Spreizdübels 201, der in ein Bohrloch in einer Gipskartonplatte 227 eingesetzt ist und mit einer Schraube 228 verspreizt wurde. Beim Eindrehen der Schraube 228 wurde der Spreizdübel 201 zunächst wie oben beschrieben radial geweitet, bis der Schraubenkopf an einem zu befestigenden Bauteil (nicht dargestellt) oder am Radialflansch 204 des Spreizdübels 201 anlag. Durch weiteres Drehen der Schraube 228 wurde die vordere Hülse 224 in Richtung der hinteren Hülse 220 gezogen, wodurch der Stauchbereich 225 des Spreizbereichs 209 gestaucht wurde. Beim Stauchen des Stauchbereichs 225 knickten die sekundären Spreizzungen 218, 219 aus, wobei sich die Spreizzungen 218 relativ zu den Spreizzungen 219 bewegen und sich an der Gleitfläche 216 voneinander lösen. Aufgrund der Wahl der Kunststoffkomponenten der beiden Spreizhülsen 202, 203 sind die relativ spröden sekundären Spreizzungen 219 der zweiten Spreizhülse 203 in radialer Richtung nach außen geknickt. Dies führte dazu, dass der Torsionswiderstand des Spreizdübels 201 reduziert wurde, wodurch die relativ weichen sekundären Spreizzungen 218 der ersten Spreizhülse 202 tordierten und einen Knoten 229 bildeten, wie dies in Figur 8 zu sehen ist. Der Knoten 229 verankert den Spreizdübel 201 formschlüssig in der Gipskartonplatte 227. Zudem drückt der Knoten 229, gemeinsam mit der vorderen Hülse 224, die harten, sekundären Spreizzungen 219 sternförmig nach außen, wodurch die formschlüssige Verankerung des Spreizdübels 201 verbessert wird, da eine größere Fläche der Gipskartonplatte 227 aktiviert werden kann. Mit dem erfindungsgemäßen Spreizdübel 201 kann somit auch in einem Hohlbaustoff eine sehr hohe Haltekraft erreicht werden.

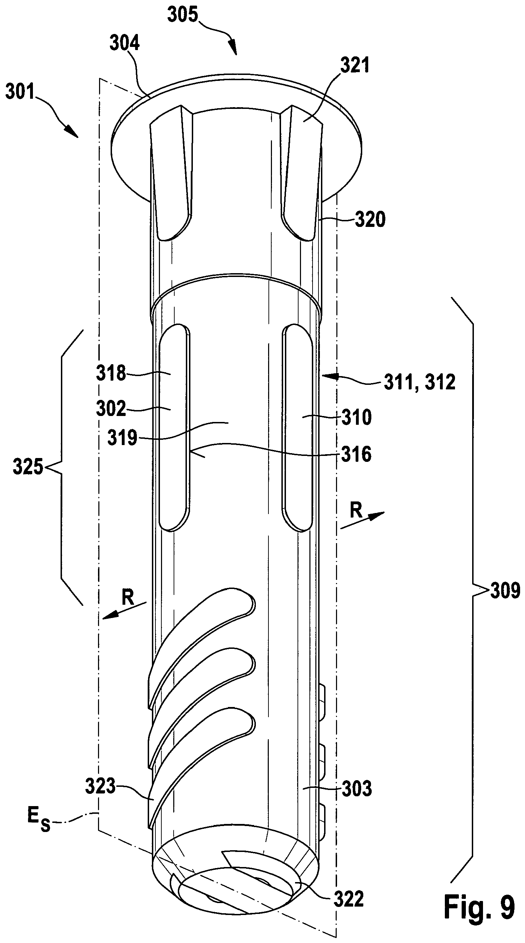

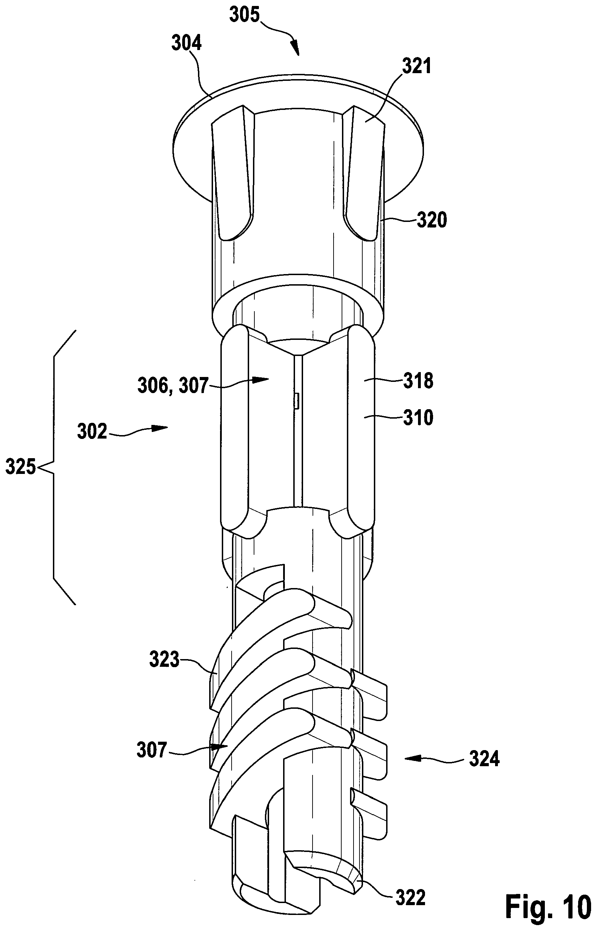

Der in den Figuren 9 und 10 dargestellte erfindungsgemäße Spreizdübel 301 entspricht im Wesentlichen dem in den Figuren 5 bis 8 dargestellten Spreizdübel 201. Er unterscheidet sich allerdings in der Ausbildung der vorderen Hülse 324, die statt V-förmigen Verbindungsstegen gerade Verbindungsstege 323 aufweist, die unter einem Winkel zur Längsachse geneigt sind. Zum Weiten des Spreizdübels 301 beim Einführen eines Spreizelements werden die Stege 323 in Richtung der radialen Spreizrichtung R geneigt, wodurch sich der Abstand der beiden Spreizschalen 322 vergrößert.

Zudem sind die beiden Kunststoffkomponenten der ersten und zweiten Spreizhülse 302, 303 im Wesentlichen aus dem gleichen Material. Für beide Spreizhülsen 302, 303 wird das Polyamid PA6 verwendet, wobei beispielsweise die Kunststoffkomponente einer der Spreizhülsen 302, 303 eingefärbt werden kann. Durch die Verwendung von im Wesentlichen gleichen Kunststoffkomponenten wird ein relativ gleichmäßiger Anpressdruck über die Umfangsfläche des Spreizdübels 301 erreicht.

### Bezugszeichenliste

### Spreizdübel

- 1, 101, 201, 301: Spreizdübel
- 2, 102, 202, 302: erste Spreizhülse
- 3, 103, 203, 303: zweite Spreizhülse
- 4, 104, 204, 304: Radialflansch
- 5, 105, 205, 305: axialer Führungskanal
- 6, 106, 206, 306: Längsschlitz
- 7, 107, 207, 307: Durchbrechung
- 8, 208, 308: primäre Spreizzunge
- 9, 109, 209, 309: Spreizbereich
- 10, 110, 210, 310: Längsrippe
- 11, 111, 211, 311: Öffnung
- 12, 112, 212, 312: Drehsicherung
- 13, 113: erster Spreizkörper
- 14, 114: zweiter Spreizkörper
- 15, 115: Keil- oder Schrägfläche
- 16, 116, 216, 316: Gleitfläche
- 117: Längsfalte
- 18, 118, 218, 318: sekundäre Spreizzunge der ersten Spreizhülse 2, 102, 202, 302
- 19, 119, 219, 319: sekundäre Spreizzunge der zweiten Spreizhülse 3, 103, 203, 303
- 220, 320: rohrförmige, hintere Hülse
- 221, 321: keilförmige Rippe
- 222, 322: Spreizschale
- 223, 323: Verbindungssteg
- 224, 324: vordere Hülse
- 225, 325: Stauchbereich
- 226: radiale Rippe
- 227: Gipskartonplatte
- 228: Schraube
- 229: Knoten

- R: radiale Richtung
- E_{S}: Spreizebene

## Patentansprüche

1. Spreizdübel (1, 101, 201, 301) aus Kunststoff,
- mit einem Spreizbereich (9, 109, 209, 309), der durch ein Spreizelement aufspreizbar ist,
- wobei das Spreizelement zum Aufspreizen in einen axialen Führungskanal (5, 105, 205, 305) des Spreizdübels (1, 101, 201, 301) einführbar ist,
- mit einer ersten Spreizhülse (2, 102, 202, 302), und
- mit einer zweiten Spreizhülse (3, 103, 203, 303), die die erste Spreizhülse (2, 102, 202, 302) in einem unverspreizten Zustand zumindest teilweise umhüllt,
- wobei die erste Spreizhülse (2, 102, 202, 302) und die zweite Spreizhülse (3, 103, 203, 303) im unverspreizten Zustand dreh- und zugfest miteinander verbunden sind,
- wobei im Spreizbereich (9, 109, 209, 309) eine Gleitfläche (16, 116, 216, 316) zwischen der ersten Spreizhülse (2, 102, 202, 302) und der zweiten Spreizhülse (3, 103, 203, 303) ausgebildet ist, derart
- dass sich beim Verspreizen des Spreizdübels (1, 101, 201, 301) die erste Spreizhülse (2, 102, 202, 302) im Spreizbereich (9, 109, 209, 309) von der zweiten Spreizhülse (3, 103, 203, 303) lösen kann und relativ zur zweiten Spreizhülse (3, 103, 203, 303) bewegbar ist,
**dadurch gekennzeichnet,**
- **dass** die erste Spreizhülse (2, 102, 202, 302) durch das Spreizelement selbst aufspreizbar ist, und
- **dass** die erste Spreizhülse (2, 102, 202, 302) in ihrer Umfangsfläche eine Durchbrechung (7, 107, 207, 307) aufweist, die ein Spreizen der ersten Spreizhülse (2, 102, 202, 302) in radialer Richtung erleichtert.

2. Spreizdübel nach Anspruch 1, **dadurch gekennzeichnet, dass** die erste Spreizhülse (2, 102, 202, 302) einen Kern beim Urformen der zweiten Spreizhülse (3, 103, 203, 303) bildet.

3. Spreizdübel nach Anspruch 1 oder 2, **dadurch gekennzeichnet, dass** der Spreizdübel (1, 101, 201, 301) im Mehrkomponentenspritzgussverfahren hergestellt ist.

4. Spreizdübel nach einem der Ansprüche 1 bis 3, **dadurch gekennzeichnet, dass** die erste Spreizhülse (2, 102, 202) aus einer ersten Kunststoffkomponente und die zweite Spreizhülse (3, 103, 203) aus einer zweiten Kunststoffkomponente gefertigt ist, wobei die beiden Kunststoffkomponenten verschieden sind.

5. Spreizdübel nach einem der Ansprüche 1 bis 3, **dadurch gekennzeichnet, dass** die erste Spreizhülse (302) aus einer ersten Kunststoffkomponente und die zweite Spreizhülse (303) aus einer zweiten Kunststoffkomponente gefertigt sind, wobei die beiden Kunststoffkomponenten im Wesentlichen aus dem gleichen Material sind.

6. Spreizdübel nach Anspruch 1, **dadurch gekennzeichnet, dass** die zweite Spreizhülse (3, 103, 203, 303) die Durchbrechung (7, 107, 207, 307) im Wesentlichen verschließt.

7. Spreizdübel nach einem der Ansprüche 1 bis 6, **dadurch gekennzeichnet, dass** die zweite Spreizhülse (3, 103, 203, 303) und die erste Spreizhülse (2, 102, 202, 302) in derselben Richtung aufspreizen.

8. Spreizdübel nach einem der Ansprüche 1 bis 7, **dadurch gekennzeichnet, dass** die zweite Spreizhülse (3, 103) die erste Spreizhülse (2, 102,) in axialer Richtung im Wesentlichen vollständig umhüllt.

9. Spreizdübel nach einem der Ansprüche 1 bis 8, **dadurch gekennzeichnet, dass** die zweite Spreizhülse (3, 103, 203, 303) in ihrer Umfangsfläche eine Öffnung (11, 111, 211, 311) aufweist, die ein Spreizen der zweiten Spreizhülse erleichtert.

10. Spreizdübel nach einem der Ansprüche 1 bis 9, **dadurch gekennzeichnet, dass** sich die erste Spreizhülse (2, 102, 202, 302) in axialer Richtung im Wesentlichen über den gesamten Spreizbereich (9, 109, 209, 309) erstreckt.

11. Spreizdübel nach einem der Ansprüche 1 bis 10, **dadurch gekennzeichnet, dass** an beiden Spreizhülsen (2, 102, 202, 302; 3, 103, 203, 303) sekundäre Spreizzungen (18, 118, 218, 318; 19, 119, 219, 319) ausgebildet sind, die gemeinsam im Spreizbereich (9, 109, 209, 309) angeordnet sind.

12. Spreizdübel nach Anspruch 11, **dadurch gekennzeichnet, dass** die sekundären Spreizzungen (18, 118, 218, 318) der ersten Spreizhülse (2, 102, 202, 302) und die sekundären Spreizzungen (19, 119, 219, 319) der zweiten Spreizhülse (3, 103, 203, 303) in Umfangsrichtung abwechselnd angeordnet sind.

13. Spreizdübel nach einem der Ansprüche 1 bis 12, **dadurch gekennzeichnet, dass** die erste Spreizhülse (2, 102, 202, 302) mindestens eine nach außen abstehende Längsrippe (10, 110, 210, 310), die in eine korrespondierende Öffnung (11, 111, 211, 311) der zweiten Spreizhülse (3, 103, 203, 303) eingreift, als Drehsicherung (12, 112, 212, 312) aufweist.

14. Spreizdübel nach einem der Ansprüche 1 bis 13, **dadurch gekennzeichnet, dass** die Durchbrechung (7, 107, 207, 307) als Längsschlitz (6, 106, 206, 306) ausgestaltet ist.

15. Spreizdübel nach Anspruch 14, **dadurch gekennzeichnet, dass** der Längsschlitz als Materialschwächung, insbesondere als Längsfalte (117), ausgebildet ist.

## Claims

1. Expansible fixing plug (1, 101, 201, 301) made of plastics material,
- having an expansion region (9, 109, 209, 309) which can be expanded by an expansion element,
- wherein the expansion element can be introduced for expansion into an axial guide channel (5, 105, 205, 305) of the expansible fixing plug (1, 101, 201, 301),
- having a first expansible sleeve (2, 102, 202, 302) and
- having a second expansible sleeve (3, 103, 203, 303) which at least partly encloses the first expansible sleeve (2, 102, 202, 302) in an unexpanded state,
- wherein the first expansible sleeve (2, 102, 202, 302) and the second expansible sleeve (3, 103, 203, 303) are connected together in the unexpanded state so as to be fixed against relative rotation and tension-resistant,
- wherein a sliding surface (16, 116, 216, 316) is formed in the expansion region (9, 109, 209, 309) between the first expansible sleeve (2, 102, 202, 302) and the second expansible sleeve (3, 103, 203, 303), such that
- when the expansible fixing plug (1, 101, 201, 301) is expanded, the first expansible sleeve (2, 102, 202, 302) is able to become detached from the second expansible sleeve (3, 103, 203, 303) in the expansion region (9, 109, 209, 309) and is movable relative to the second expansible sleeve (3, 103, 203, 303),
**characterised in that**
- the first expansible sleeve (2, 102, 202, 302) can be expanded by the expansion element itself, and
- the first expansible sleeve (2, 102, 202, 302) has in its peripheral surface a through-hole (7, 107, 207, 307) which facilitates expansion of the first expansible sleeve (2, 102, 202, 302) in the radial direction.

2. Expansible fixing plug according to claim 1, **characterised in that** the first expansible sleeve (2, 102, 202, 302) forms a core during the primary forming of the second expansible sleeve (3, 103, 203, 303).

3. Expansible fixing plug according to claim 1 or 2, **characterised in that** the expansible fixing plug (1, 101, 201, 301) is produced by the multicomponent injection moulding process.

4. Expansible fixing plug according to any one of claims 1 to 3, **characterised in that** the first expansible sleeve (2, 102, 202) is manufactured from a first plastics component and the second expansible sleeve (3, 103, 203) is manufactured from a second plastics component, wherein the two plastics components are different.

5. Expansible fixing plug according to any one of claims 1 to 3, **characterised in that** the first expansible sleeve (302) is manufactured from a first plastics component and the second expansible sleeve (303) is manufactured from a second plastics component, wherein the two plastics component are substantially of the same material.

6. Expansible fixing plug according to claim 1, **characterised in that** the second expansible sleeve (3, 103, 203, 303) substantially closes the through-hole (7, 107, 207, 307).

7. Expansible fixing plug according to any one of claims 1 to 6, **characterised in that** the second expansible sleeve (3, 103, 203, 303) and the first expansible sleeve (2, 102, 202, 302) expand in the same direction.

8. Expansible fixing plug according to any one of claims 1 to 7, **characterised in that** the second expansible sleeve (3, 103) encloses the first expansible sleeve (2, 102) substantially completely in the axial direction.

9. Expansible fixing plug according to any one of claims 1 to 8, **characterised in that** the second expansible sleeve (3, 103, 203, 303) has in its peripheral surface an opening (11, 111, 211, 311) which facilitates expansion of the second expansible sleeve.

10. Expansible fixing plug according to any one of claims 1 to 9, **characterised in that** the first expansible sleeve (2, 102, 202, 302) extends substantially over the entire expansion region (9, 109, 209, 309) in the axial direction.

11. Expansible fixing plug according to any one of claims 1 to 10, **characterised in that** secondary expansion tongues (18, 118, 218, 318; 19, 119, 219, 319) are formed on the two expansible sleeves (2, 102, 202, 302; 3, 103, 203, 303), which expansion tongues are together arranged in the expansion region (9, 109, 209, 309).

12. Expansible fixing plug according to claim 11, **characterised in that** the secondary expansion tongues (18, 118, 218, 318) of the first expansible sleeve (2, 102, 202, 302) and the secondary expansion tongues (19, 119, 219, 319) of the second expansible sleeve (3, 103, 203, 303) are arranged alternately in the peripheral direction.

13. Expansible fixing plug according to any one of claims 1 to 12, **characterised in that** the first expansible sleeve (2, 102, 202, 302) has at least one outwardly protruding longitudinal rib (10, 110, 210, 310) which engages in a corresponding opening (11, 111, 211, 311) in the second expansible sleeve (3, 103, 203, 303), as an anti-rotation means (12, 112, 212, 312).

14. Expansible fixing plug according to any one of claims 1 to 13, **characterised in that** the through-hole (7, 107, 207, 307) is in the form of a longitudinal slot (6, 106, 206, 306).

15. Expansible fixing plug according to claim 14, **characterised in that** the longitudinal slot is in the form of a material weakening, especially in the form of a longitudinal fold (117).

## Revendications

1. Cheville expansible (1, 101, 201, 301) en matière plastique, comprenant
- une zone déployable (9, 109, 209, 309) pouvant être déployée par un élément d'écartement,
- ledit élément d'écartement pouvant être introduit, en vue du déploiement, dans un canal axial de guidage (5, 105, 205, 305) de ladite cheville expansible (1,101, 201, 301) ;
- une première douille expansible (2, 102, 202, 302) ; et
- une seconde douille expansible (3, 103, 203, 303) qui ceinture au moins partiellement ladite première douille expansible (2, 102, 202, 302) dans un état non déployé,
- ladite première douille expansible (2, 102, 202, 302) et ladite seconde douille expansible (3, 103, 203, 303) étant reliées l'une à l'autre avec résistance à la rotation et à la traction, à l'état non déployé,
- une surface de glissement (16, 116, 216, 316) étant ménagée dans ladite zone déployable (9, 109, 209, 309), entre ladite première douille expansible (2, 102, 202, 302) et ladite seconde douille expansible (3, 103, 203, 303), de telle sorte
- que, lors de l'expansion de ladite cheville expansible (1, 101, 201, 301), ladite première douille expansible (2, 102, 202, 302) puisse se dissocier d'avec ladite seconde douille expansible (3, 103, 203, 303) dans ladite zone déployable (9, 109, 209, 309), et puisse être mue par rapport à ladite seconde douille expansible (3, 103, 203, 303),
**caractérisée par le fait**
- **que** la première douille expansible (2, 102, 202, 302) peut être déployée par l'élément d'écartement proprement dit ; et
- **que** ladite première douille expansible (2, 102, 202, 302) est pourvue, dans la surface de son pourtour, d'une discontinuité (7, 107, 207, 307) facilitant un déploiement de ladite première douille expansible (2, 102, 202, 302) dans le sens radial.

2. Cheville expansible selon la revendication 1, **caractérisée par le fait que** la première douille expansible (2, 102, 202, 302) forme un noyau au stade du moulage initial de la seconde douille expansible (3, 103, 203, 303).

3. Cheville expansible selon la revendication 1 ou 2, **caractérisée par le fait que** ladite cheville expansible (1, 101, 201, 301) est produite suivant le procédé de moulage par injection à composants multiples.

4. Cheville expansible selon l'une des revendications 1 à 3, **caractérisée par le fait que** la première douille expansible (2, 102, 202, 302) est fabriquée en un premier composant de matière plastique et la seconde douille expansible (3, 103, 203, 303) est fabriquée en un second composant de matière plastique, les deux composants de matière plastique étant différents.

5. Cheville expansible selon l'une des revendications 1 à 3, **caractérisée par le fait que** la première douille expansible (302) est fabriquée en un premier composant de matière plastique et la seconde douille expansible (303) est fabriquée en un second composant de matière plastique, les deux composants de matière plastique étant constitués, pour l'essentiel, du même matériau.

6. Cheville expansible selon la revendication 1, **caractérisée par le fait que** la seconde douille expansible (3, 103, 203, 303) obture sensiblement la discontinuité (7, 107, 207, 307).

7. Cheville expansible selon l'une des revendications 1 à 6, **caractérisée par le fait que** la seconde douille expansible (3, 103, 203, 303) et la première douille expansible (2, 102, 202, 302) se déploient dans la même direction.

8. Cheville expansible selon l'une des revendications 1 à 7, **caractérisée par le fait que** la seconde douille expansible (3, 103) ceinture, pour l'essentiel, la totalité de la première douille expansible (2, 102) dans le sens axial.

9. Cheville expansible selon l'une des revendications 1 à 8, **caractérisée par le fait que** la seconde douille expansible (3, 103, 203, 303) est pourvue, dans la surface de son pourtour, d'une ouverture (11, 111, 211, 311) facilitant un déploiement de ladite seconde douille expansible.

10. Cheville expansible selon l'une des revendications 1 à 9, **caractérisée par le fait que** la première douille expansible (2, 102, 202, 302) s'étend pour l'essentiel, dans le sens axial, sur l'intégralité de la zone déployable (9, 109, 209, 309).

11. Cheville expansible selon l'une des revendications 1 à 10, **caractérisée par le fait que** des languettes déployables auxiliaires (18, 118, 218, 318 ; 19, 119, 219, 319), façonnées sur les deux douilles expansibles (2, 102, 202, 302 ; 3, 103, 203, 303), sont collectivement disposées dans la zone déployable (9, 109, 209, 309).

12. Cheville expansible selon la revendication 11, **caractérisée par le fait que** les languettes déployables auxiliaires (18, 118, 218, 318) de la première douille expansible (2, 102, 202, 302), et les languettes déployables auxiliaires (19, 119, 219, 319) de la seconde douille expansible (3, 103, 203, 303), sont agencées en alternance dans la direction périphérique.

13. Cheville expansible selon l'une des revendications 1 à 12, **caractérisée par le fait que** la première douille expansible (2, 102, 202, 302) est munie, en tant que verrou antirotation (12, 112, 212, 312), d'au moins une nervure longitudinale (10, 110, 210, 310) faisant saillie vers l'extérieur, qui pénètre dans une ouverture concordante (11, 111, 211, 311) de la seconde douille expansible (3, 103, 203, 303).

14. Cheville expansible selon l'une des revendications 1 à 13, **caractérisée par le fait que** la discontinuité (7, 107, 207, 307) est configurée en une fente longitudinale (6, 106, 206, 306).

15. Cheville expansible selon la revendication 14, **caractérisée par le fait que** la fente longitudinale est réalisée sous la forme d'un affaiblissement de matière, notamment en tant que zone longitudinale repliée (117).
